# EUROPEAN PATENT APPLICATION

(11) **EP 0 784 068 A1**
(43) Date of publication of application: **16.07.1997**
(21) Application number: 97100360.3
(22) Date of filing: 10.01.1997
(51) Int. Cl.: C08G 77/46, C08G 77/38, C10L 1/28, B01D 19/04

(54) **Silicone foam control agents for hydrocarbon liquids**

(30) Priority: 11.01.1996 US 584505
(71) Applicant: DOW CORNING CORPORATION, Midland, Michigan 48686-0994 (US)
(72) Inventor: Battice, David Robert, Midland, Michigan 48642 (US); Petroff, Lenin James, Bay City, Michigan 48706 (US); Fey, Kenneth Christopher, Midland, Michigan 48640 (US); Stanga, Michael Allen, Midland, Michigan 48640 (US)
(74) Representative: Spott, Gottfried, Dr.

(57) **Abstract**

The present invention claims an organopolysiloxane compound having at least one group having the formula 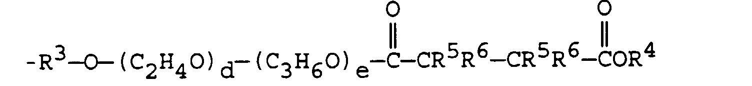 wherein R³ is a divalent hydrocarbon group having from 1 to 20 carbon atoms, R⁵ and R⁶ are selected from a hydrogen atom or a group having the formula -(CₙH₂ₙ₊₁) where n has a value from 1 to 30, R⁴ is selected from hydrogen atom, alkyl group or aryl group, d has a value from 0 to 150 and e has a value from 0 to 150, with the proviso that the value of d+e is greater than zero. These compounds reduce the amount of foam in hydrocarbon fuels, especially in diesel or jet fuels. Our organopolysiloxane compounds function as foam control agents which display consistent compatibility and miscibility with other fuel additives which are frequently present in hydrocarbon fuels.

## Description

This invention provides silicone compounds which are useful as foam control agents in foaming systems. More particularly, this invention introduces succinic anhydride modified silicone polyethers and their use as foam control agents in hydrocarbon liquids.

Current fuels exhibit foaming during transfer operations, such as filling a vehicle's fuel tank at a filling station. In the processing, transportation and storage of hydrocarbon liquids, it is frequently observed that foaming occurs as the liquid is passed from one vessel to another. For example, as liquid hydrocarbon fuel is passed quickly into a storage tank a foam may develop at the surface of the fuel and, in many cases, the extent of foaming is sufficiently significant and persistent to require a reduction in the rate of passage of the liquid fuel into the vessel. It is highly desirable to provide means for controlling foaming to permit higher rates of passage.

There are a number of disclosures which describe compositions which reduce or eliminate foam in hydrocarbon liquids. These are generally represented by U.S. Patents 3,233,986, 4,690,668, 4,711,714, 5,296,625 and 5,397,367; or by DE-A's 4032006, 4325359 and 4343235.

In the prior art, the use of conventional silicone polyethers, which because of their higher density relative to hydrocarbon fuel can separate from the fuel over time, potentially renders them less effective without periodic agitation to re-disperse them. They also tend to be more soluble or dispersible in water, a constant component of hydrocarbon fuels. In storage tanks, water tends to coalesce, forming a layer at the bottom of the tank. As the silicone polyether settles due to gravity and its insolubility in the hydrocarbon, eventual contact with the water layer results in its being absorbed into or complexed because of its surfactancy with that phase, thus irreversibly removing it from the fuel entirely.

While a number of proposals have been made for controlling the foaming of various hydrocarbon liquids through additives (for example, silicone products as described above); the reduction of foaming in diesel fuels by acceptable silicone additives has not been completely resolved prior to this invention.

The present invention involves succinic anhydride modified silicone polyethers and their use as foam control agents in hydrocarbon liquids.

It is an object of this invention to produce organopolysiloxane foam control agents which display consistent compatibility and miscibility with hydrocarbon fuels.

It is another object to employ only organopolysiloxane foam control agents which are sparingly soluble or dispersible in water.

It is a further object of the present invention to provide organopolysiloxane foam control agents which do not lose their defoaming capability during storage as readily as conventional silicone polyethers.

The present invention is an organopolysiloxane compound having its formula selected from

(i) RR¹R²SiO(R₂SiO)ₐ(RR¹SiO)_{b}(RR²SiO)_{c}SiRR¹R²,

(ii) RR¹R²SiO(R₂SiO)ₐ(RR²SiO)_{c}SiRR¹R²,

(iii) RR¹R²SiO(R₂SiO)ₐ(RR¹SiO)_{b}SiRR¹R², or

(iv) RR¹R²SiO(R₂SiO)ₐSiRR¹R²

wherein R is a monovalent hydrocarbon group having from 1 to 20 carbon atoms, R¹ is R or a group having its formula selected from

(v) -R³-O-(C₂H₄O)_{d}-(C₃H₆O)ₑ-R⁴,

(vi) -R³-O-(C₂H₄O)_{d}-R⁴, or

(vii) -R³-O-(C₃H₆O)ₑ-R⁴,

R² is R or a group having its formula selected from 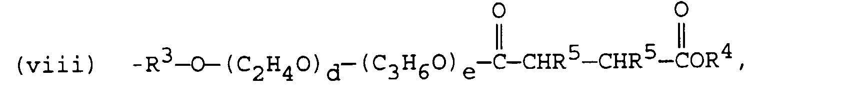 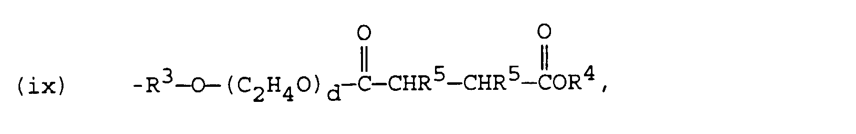 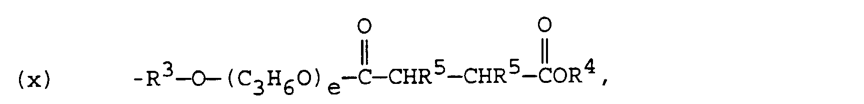 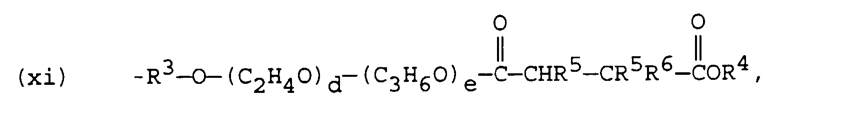 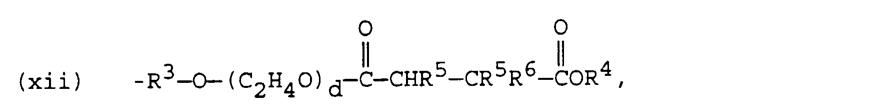 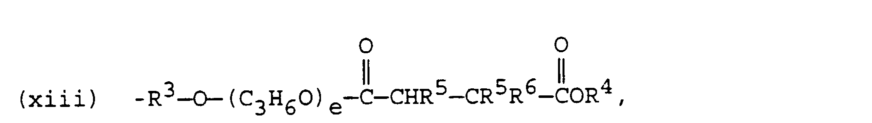 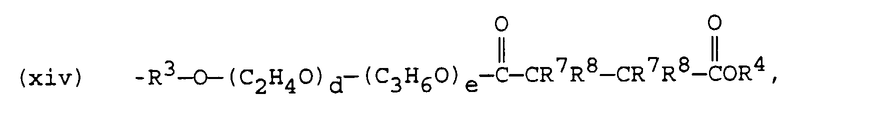 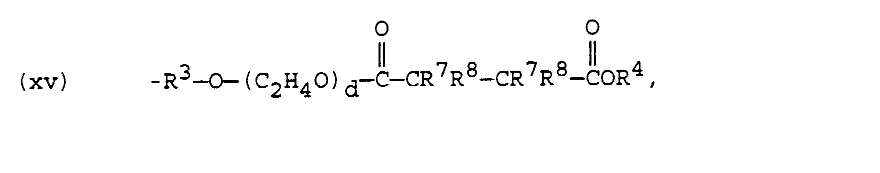 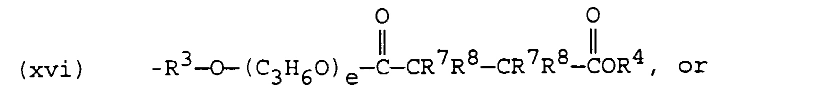 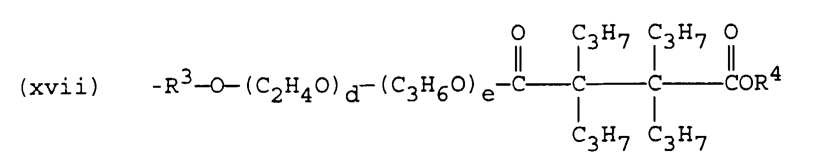 wherein R³ is a divalent hydrocarbon group having from 1 to 20 carbon atoms, R⁴ is selected from hydrogen atom, alkyl group or aryl group, R⁵ and R⁶ are each a group having the formula -(CₙH₂ₙ₊₁) where n has a value from 1 to 30, R⁷ and R⁸ are each a group having the formula -(CₙH₂ₙ₊₁) where n has a value of 1, 2 or 4 to 30, a has a value from 1 to 1000, b has a value from greater than zero to 100, c has a value from greater than zero to 100, d has a value from greater than zero to 150 and e has a value from greater than zero to 150, with the proviso that there is at least one group having its formula selected from formulae (viii) to (xvii), as defined above, per molecule.

R is a monovalent hydrocarbon group having from 1 to 20 carbon atoms. Monovalent hydrocarbon radicals include alkyl groups, such as methyl, ethyl, propyl, butyl, hexyl, octyl and decyl; cycloaliphatic groups such as cyclohexyl; aryl groups such as phenyl, tolyl and xylyl; and aralkyl groups such as benzyl or phenylethyl. It is preferred that the monovalent hydrocarbon radicals for R are methyl and phenyl. The several R radicals are identical or different, as desired.

The group R³ is a divalent hydrocarbon group having from 1 to 20 carbon atoms which is exemplified by groups such as alkylene groups including methylene, ethylene, propylene, butylene, pentylene, trimethylene, 2-methyltrimethylene, pentamethylene, hexamethylene, 3-ethylhexamethylene, octamethylene, -CH₂(CH₃)CH-, -CH₂CH(CH₃)CH₂-and -(CH₂)₁₈-; cycloalkylene radicals such as cyclohexylene; arylene radicals such as phenylene; combinations of divalent hydrocarbon radicals such as benzylene (-C₆H₄CH₂-) ; or oxygen containing groups such as -CH₂OCH₂-, -CH₂CH₂CH₂OCH₂-, -CH₂CH₂OCH₂CH₂-, -COOCH₂CH₂OOC-, -CH₂CH₂OCH(CH₃)CH₂- and -CH₂OCH₂CH₂OCH₂CH₂-. Preferred alkylene groups are those having from 2 to 8 carbon atoms.

The group R⁴ is a hydrogen atom, an alkyl group or an aryl group. The alkyl groups are exemplified by methyl, ethyl, propyl, butyl, hexyl, octyl and decyl. The aryl groups are exemplified by phenyl, tolyl and xylyl.

The groups R⁵ and R⁶ are each a group having the formula -(CₙH₂ₙ₊₁) where n has a value from 1 to 30. Groups suitable as R⁵ and R⁶ include -CH₃, -(C₂H₅), -(C₃H₇), -(C₄H₉), -(C₆H₁₃), -(C₈H₁₇), -(C₉H₁₉), -(C₁₀H₂₁), -(C₁₂H₂₅), -(C₁₄H₂₉), -(C₁₆H₃₃), -(C₁₈H₃₇), -(C₂₀H₄₁) and -(C₃₀H₆₁). The groups R⁵ and R⁶ may also be mixtures of the above substituted divalent hydrocarbon groups for example, mixtures of -(C₄H₉) and -(C₈H₁₇), -(C₉H₁₉) and -(C₁₀H₂₁) or -(C₁₂H₂₅) and -(C₁₈H₃₇). The above groups for R⁵ and R⁶ are be the same or different as desired.

The groups R⁷ and R⁸ are each a group having the formula -(CₙH₂ₙ₊₁) where n has a value of 1, 2 or 4 to 30. Groups suitable as R⁷ and R⁸ include -CH₃, -(C₂H₅), -(C₄H₉), -(C₆H₁₃), -(C₈H₁₇), -(C₉H₁₉), -(C₁₀H₂₁), -(C₁₂H₂₅), -(C₁₄H₂₉), -(C₁₆H₃₃), -(C₁₈H₃₇), -(C₂₀H₄₁) or -(C₃₀H₆₁). The groups R⁷ and R⁸ may also be mixtures of the above substituted divalent hydrocarbon groups, for example, mixtures of -(C₄H₉) and -(C₈H₁₇), -(C₉H₁₉) and -(C₁₀H₂₁) or -(C₁₂H₂₅) and -(C₁₈H₃₇). The above groups for R¹ and R⁸ are the same or different as desired.

Other alkylene oxide units may also be present, such as butylene oxide, in groups having the formulae (v) to (xvii) as defined above. Furthermore, it is also possible that groups having the formulae (v) to (xvii) are bonded to silicon through oxygen (i.e., bonded to silicon via an SiOC bond).

Preferred organopolysiloxane compounds of this invention are selected from

Me₃SiO(Me₂SiO)ₐ(MeR¹SiO)_{b}(MeR²SiO)_{c}SiMe₃

or

Me₃SiO(Me₂SiO)ₐ(MeR²SiO)_{c}SiMe₃

wherein R¹ is a group having its formula selected from

-(CH₂)₃-O-(C₂H₄O)_{d}-(C₃H₆O)ₑ-H or -(CH₂)₃-O-(C₂H₄O)_{d}-H

and R² is a group having its formula selected from 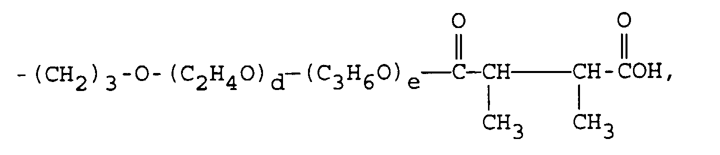 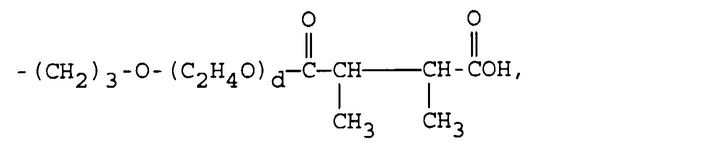 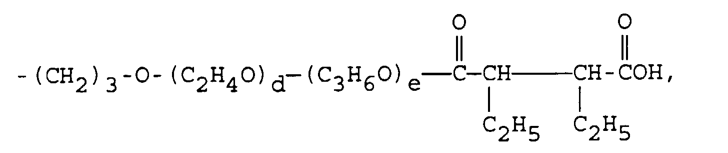 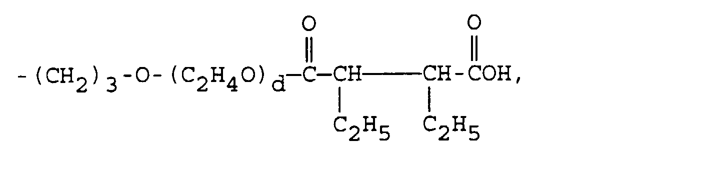 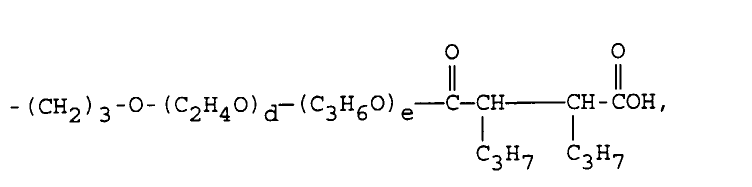 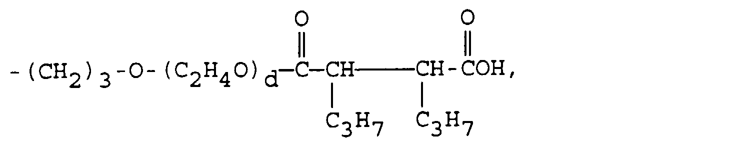 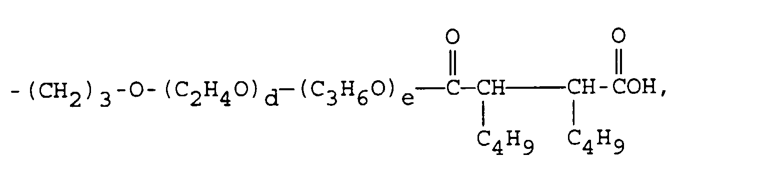 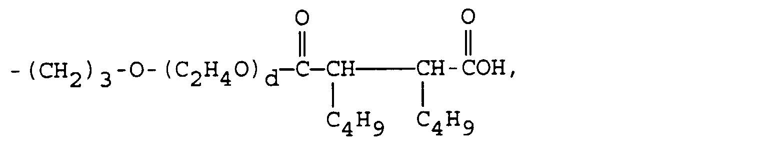 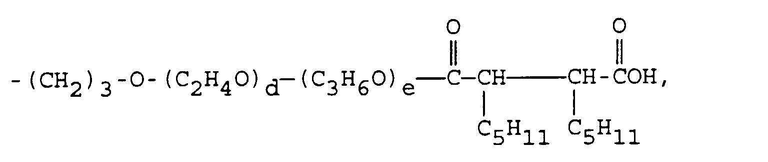 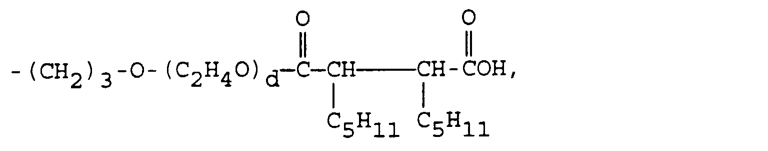 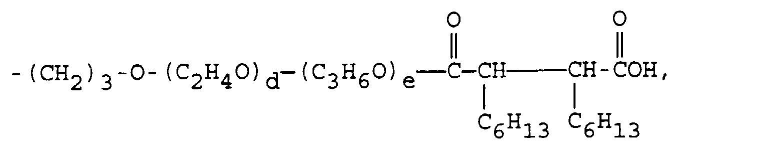 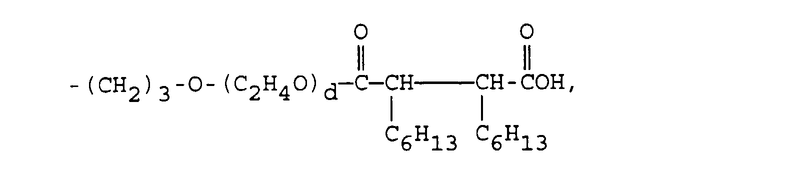 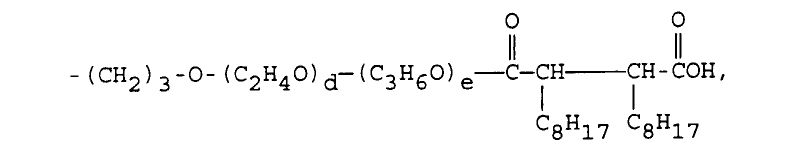 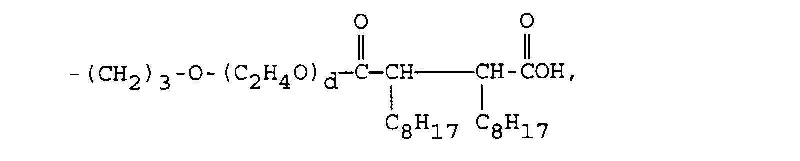 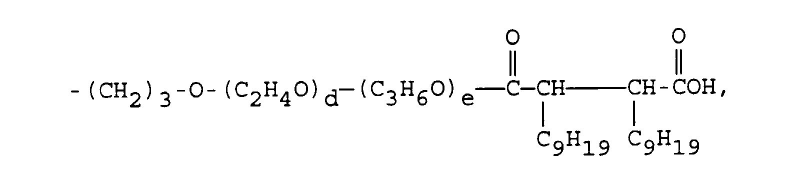 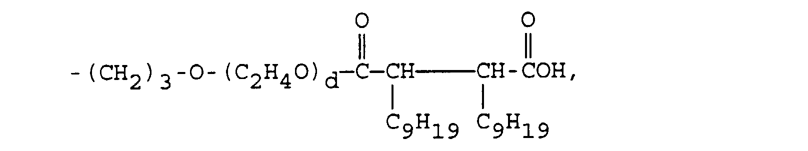 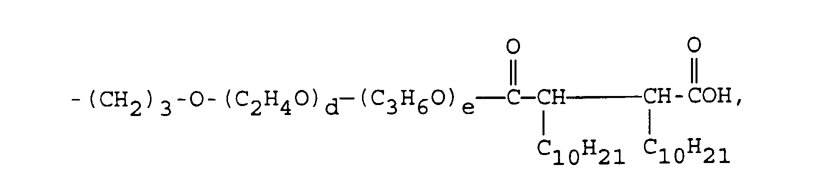 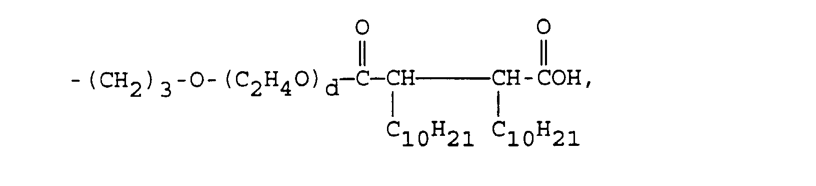 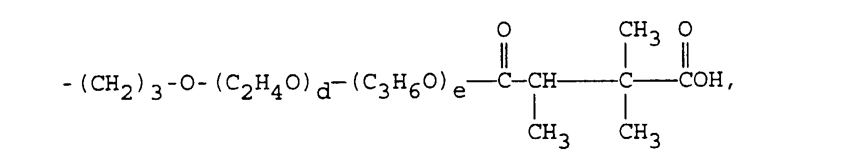 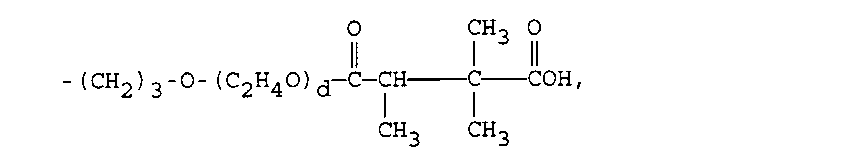 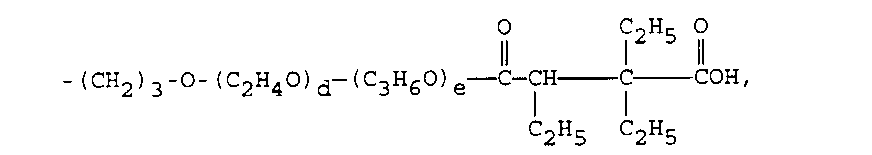 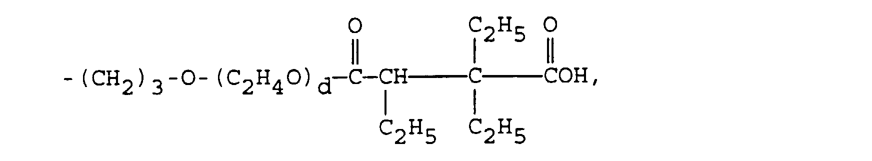 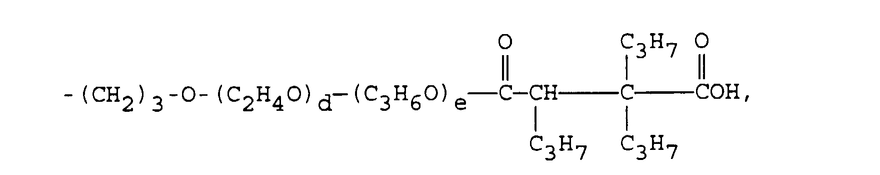 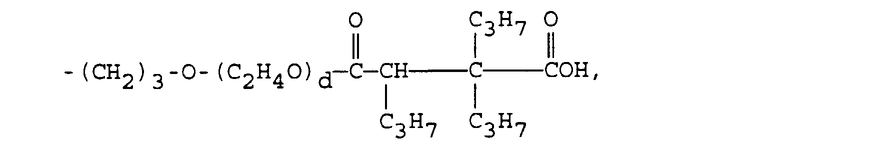 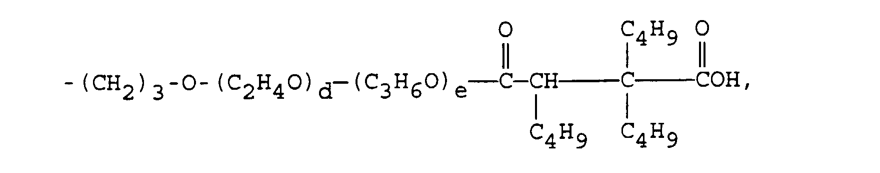 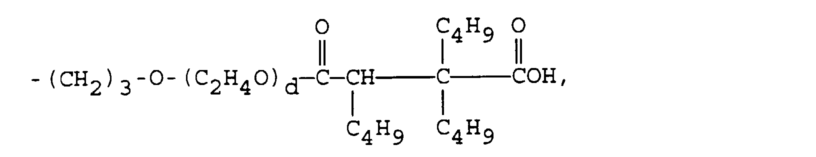 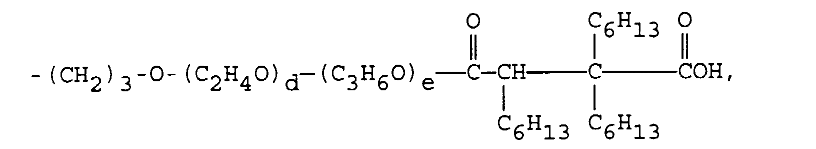 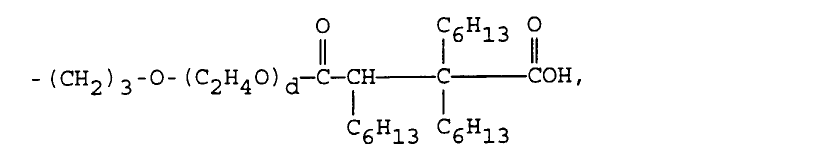 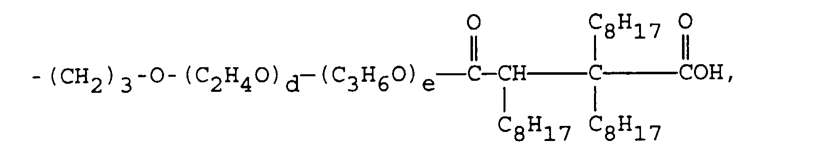 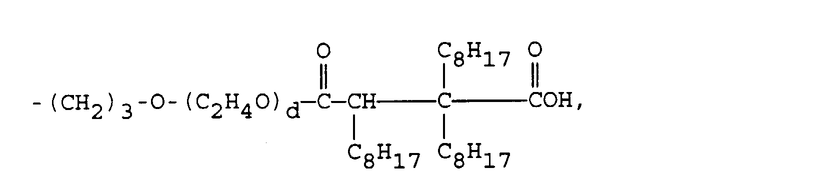 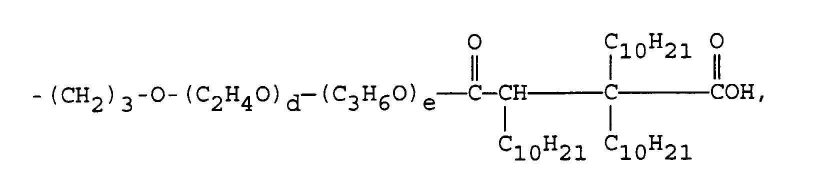 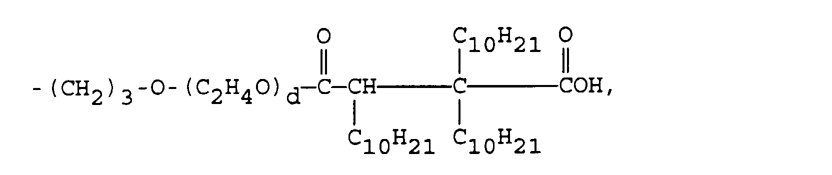 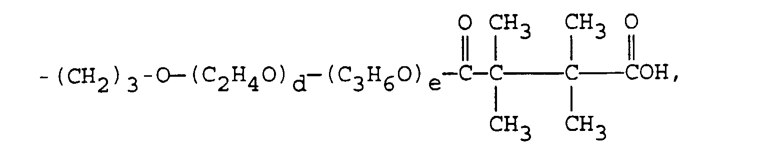 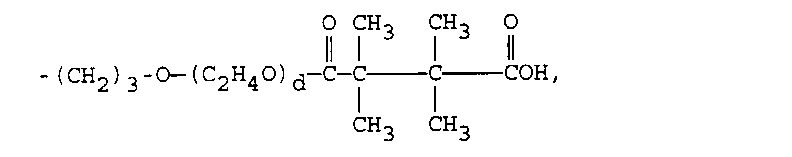 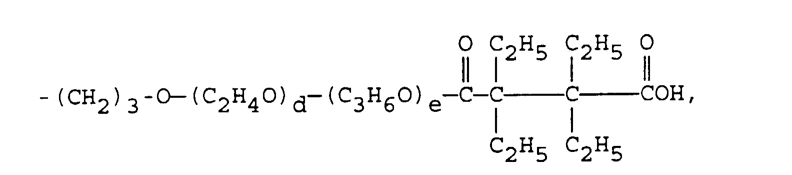 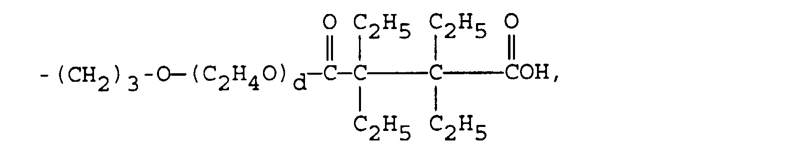 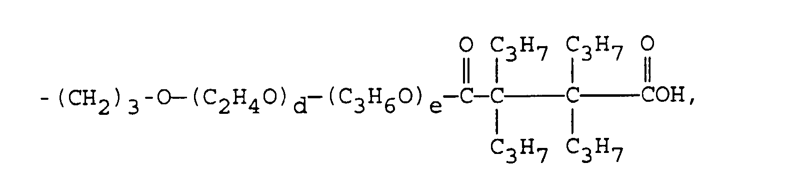 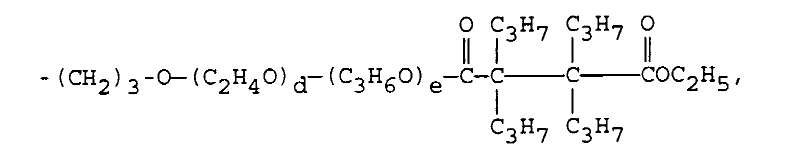 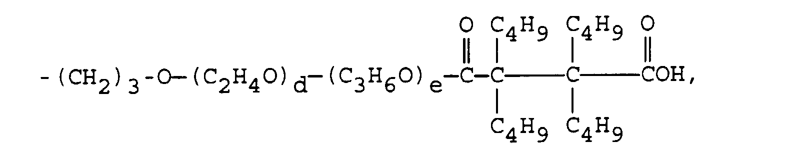 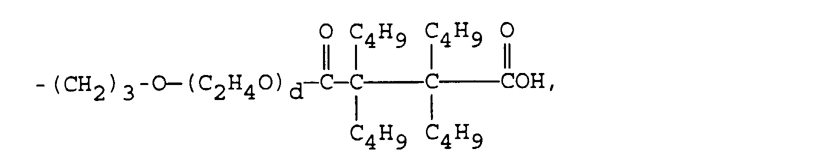 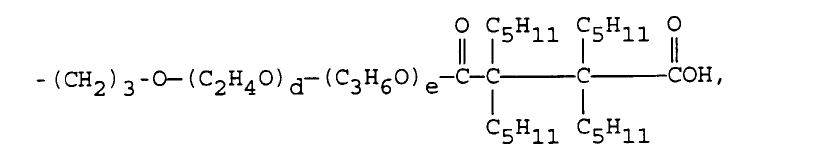 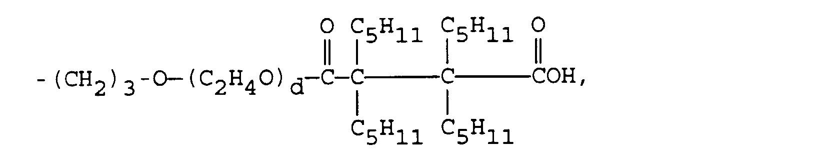 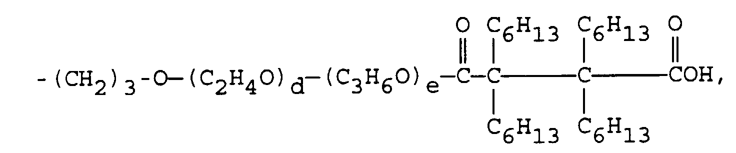 or 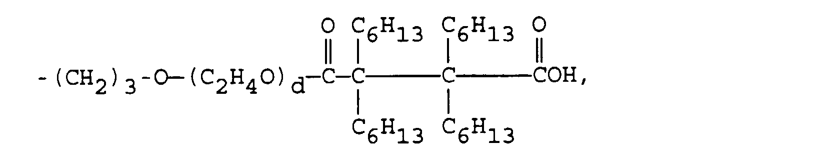 wherein Me denotes, and is hereafter, methyl, a has a value from 1 to 200, b has a value from greater than zero to 40, c has a value from greater than zero to 40, R³ is an alkylene group having from 2 to 8 carbon atoms, d has a value from greater than zero to 50 and e has a value from greater than zero to 50. It is preferred for the compounds of this invention that when b is greater than zero, that b and c be present in a ratio from 40/60 to 60/40.

The present invention further introduces a composition comprising (A) a hydrocarbon fuel and (B) an organopolysiloxane compound having its formula selected from

(i) RR¹R²SiO(R₂SiO)ₐ(RR¹SiO)_{b}(RR²SiO)_{c}SiRR¹R²,

(ii) RR¹R²SiO(R₂SiO)ₐ(RR²SiO)_{c}SiRR¹R²,

(iii) RR¹R²SiO(R₂SiO)ₐ(RR¹SiO)_{b}SiRR¹R²,

or

(iv) RR¹R²SiO(R₂SiO)ₐSiRR¹R²

wherein R is a monovalent hydrocarbon group having from 1 to 20 carbon atoms, R¹ is R or a group having its formula selected from

(v) -R³-O-(C₂H₄O)_{d}-(C₃H₆O)ₑ-R⁴,

(vi) -R³-O-(C₂H₄O)_{d}-R⁴,

or

(vii) -R³-O-(C₃H₆O)ₑ-R⁴,

R² is R or a group having its formula selected from 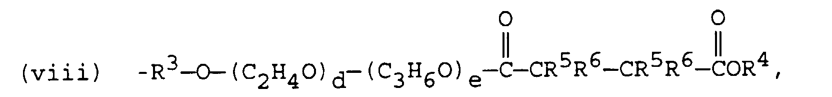 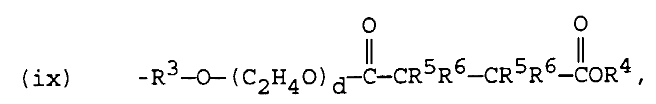 or 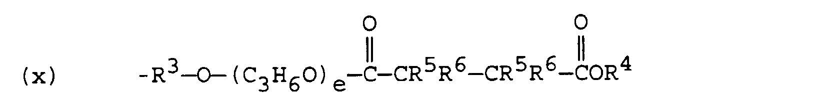 wherein R³ is a divalent hydrocarbon group having from 1 to 20 carbon atoms, R⁴ is selected from hydrogen atom, alkyl group or aryl group, R⁵ and R⁶ are selected from a hydrogen atom or a group having the formula -(CₙH₂ₙ₊₁) where n has a value from 1 to 30, a has a value from 1 to 1000, b has a value from greater than zero to 100, c has a value from greater than zero to 100, d has a value from greater than zero to 150 and e has a value from greater than zero to 150, with the proviso that there is at least one group having its formula selected from formulae (viii), (ix) or (x), as defined above, per molecule.

The hydrocarbon fuels of component (A) include fuels such as diesel fuel and jet fuel. Preferably, the fuel is used as a fuel for motor vehicles, e.g. cars, trucks, ships or aircraft. The expression "diesel fuel" means gas oil and fuel oil, including those materials referred to as light domestic or heating oils and motor vehicle fuels, irrespective of their intended use. These materials are loosely characterized as having a viscosity of not more than 115" Redwood 1 at 38°C. and a boiling point in the range of 200°C. to 380°C. Particularly included are those hydrocarbon liquids having a viscosity of 30" to 40" Redwood at 38°C., including those having a viscosity at 20°C in the range of 2.9 to 10.2 mm²/s and at 38°C. in the range of 1.6 to 6.0 mm²/s. Further, these materials have a carbon residue (Conradson) of <0.2% by weight, a water content of <0.05% by weight, a sulphur content of <1.0% by weight and a net calorific value from 10100 to 10300 Kcal/Kg.

The expression "jet fuel" means kerosene, light oils and medium oils, for example, AVTU™ fuel. This fuel is a medium oil distilling between 150° and 300°C. which distills at least 65% in volume at 250°C. It has a flash point above 38°C, has a maximum aromatic content of 20% by volume, has a kinematic viscosity of less than 15 mm²/s at -34°C. and has a freezing point not greater than -50°C.

The hydrocarbon fuels of component (A) may also be, for example, residual fuel oils having a viscosity at 38°C. of greater than 115" Redwood 1; light, medium or heavy naphtha; vaporizing oils; motor oils and motor spirits.

R is a monovalent hydrocarbon group having from 1 to 20 carbon atoms. These radicals are as delineated above for the compounds of this invention. It is preferred that the monovalent hydrocarbon radicals for R are methyl or phenyl. The several R radicals are identical or different, as desired.

The group R³ is a divalent hydrocarbon group having from 1 to 20 carbon atoms and are as delineated above for our compounds. Preferred alkylene groups are those having from 2 to 8 carbon atoms such as methylene, ethylene, propylene, butylene, pentylene, trimethylene, 2-methyltrimethylene, pentamethylene, hexamethylene 3-ethyl-hexamethylene or octamethylene.

The group R⁴ is hydrogen atom, alkyl group or aryl group as described above. It is preferred that R⁴ is selected from hydrogen, methyl or ethyl.

The groups R⁵ and R⁶ are selected from hydrogen atom or a group having the formula -(CₙH₂ₙ₊₁) where n has a value from 1 to 30. Groups suitable as R⁵ and R⁶ include hydrogen, -CH₃, -(C₂H₅), -(C₃H₇), -(C₄H₉), -(C₆H₁₃), -(C₈H₁₇), -(C₉H₁₉), -(C₁₀H₂₁), -(C₁₂H₂₅), -(C₁₄H₂₉), -(C₁₆H₃₃), -(C₁₈H₃₇), -(C₂₀H₄₁) or -(C₃₀H₆₁). The groups R⁵ and R⁶ may also be mixtures of substituted divalent hydrocarbon groups, for example, mixtures of -(C₄H₉) and -(C₈H₁₇), -(C₉H₁₉) and -(C₁₀H₂₁) or -(C₁₂H₂₅) and -(C₁₈H₃₇). The groups described for R⁵ and R⁶ are the same or different, as desired.

Other alkylene oxide units may also be present, such as butylene oxide, in groups having the formulae (v) to (x) as above. Furthermore, it is also possible that groups having the formulae (v) to (x) are bonded to silicon through oxygen (i.e. bonded to silicon via an SiOC bond).

Preferred organopolysiloxane compounds as component (B) have their formulae selected from

Me₃SiO(Me₂SiO)ₐ(MeR¹SiO)_{b}(MeR²SiO)_{c}SiMe₃

or

Me₃SiO(Me₂SiO)ₐ(MeR²SiO)_{c}SiMe₃

wherein R¹ is a group having its formula selected from

-(CH₂)₃-O-(C₂H₄O)_{d}-(C₃H₆O)ₑ-H or -(CH₂)₃-O-(C₂H₄O)_{d}-H

and R² is a group having its formula selected from 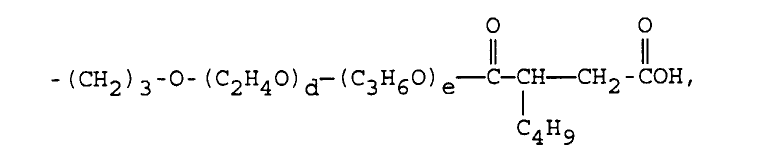 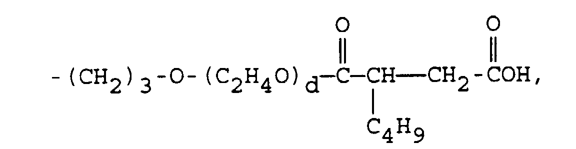 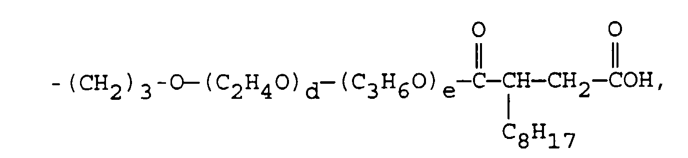 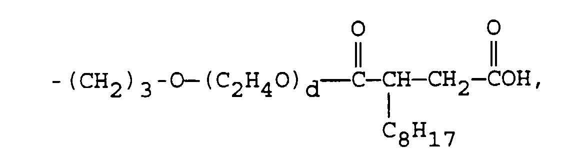 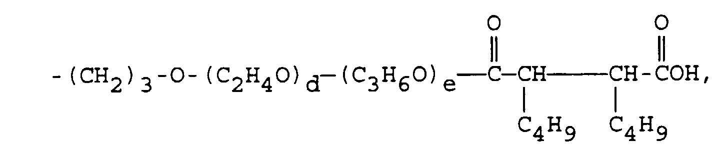 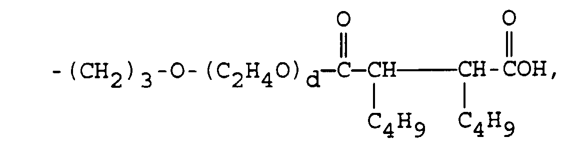 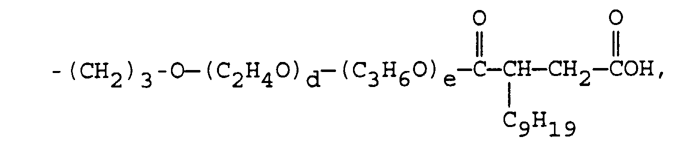 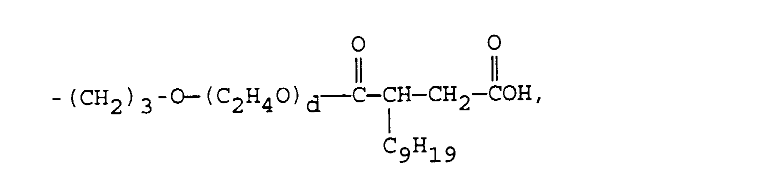 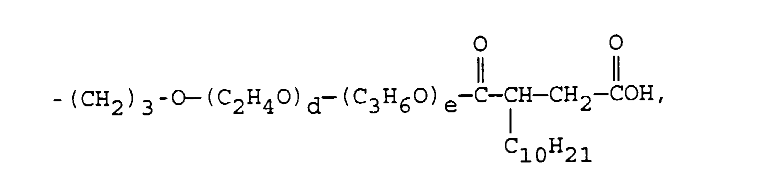 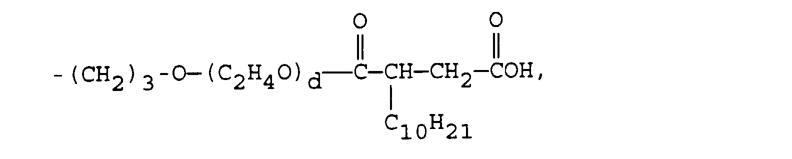 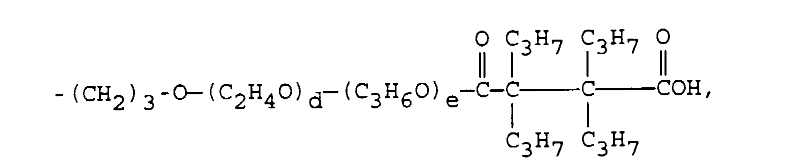 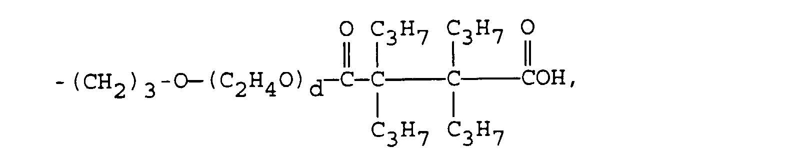 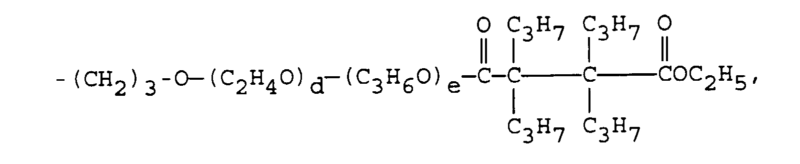 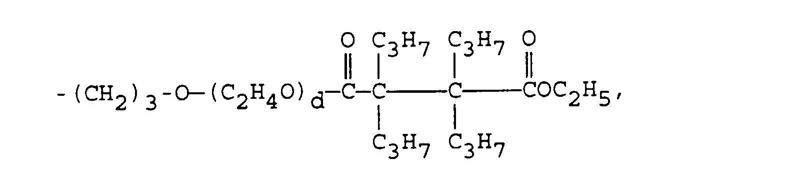 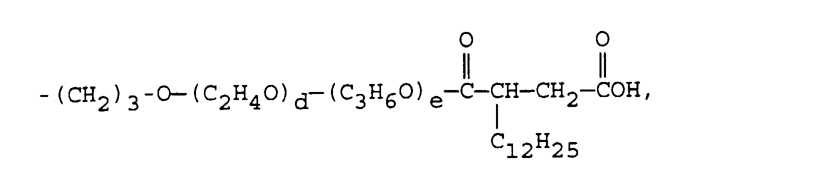 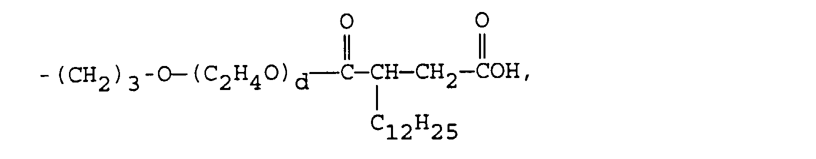 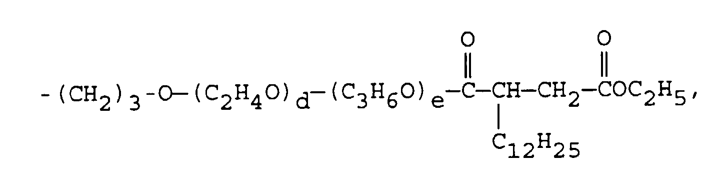 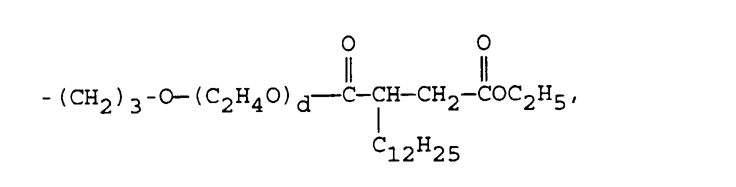 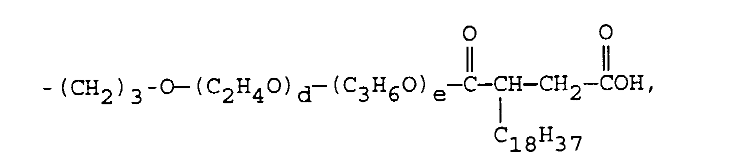 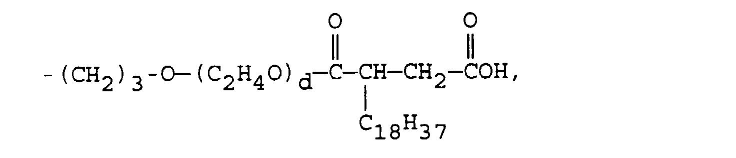 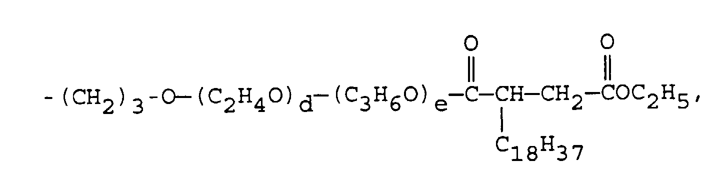 or 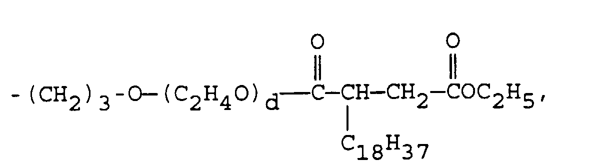 wherein Me denotes methyl, a has a value from 1 to 200, b has a value from greater than zero to 40, c has a value from greater than zero to 40, R³ is an alkylene group having from 2 to 8 carbon atoms, d has a value from greater than zero to 50 and e has a value from greater than zero to 50.

Our organopolysiloxane copolymers are added to the hydrocarbon fuel in any desired quantity and are incorporated into the liquid in any suitable manner. The copolymers are conveniently added in the form of a solution or dispersion. The preferred copolymers are effective to reduce the tendency of hydrocarbon liquids to foam when used in quantities of 100 parts per million (ppm) or less, preferably in the range from 1 to 50 ppm by volume. The most preferred copolymers are effective when used in quantities from 1 to 20 ppm by volume of the fuel.

Frequently hydrocarbon liquids also comprise various "additive packages". These packages contain corrosion inhibitors, anti-scaling agents, octane improvers, emulsifiers, detergents, demulsifiers and/or drying agents to counteract water, absorbed by the fuel during normal transfer operations and use conditions, to improve overall engine performance. These additives may also be present in the compositions of this invention. The types and quantities of these additives are well known to those skilled in the art.

The organopolysiloxanes of this invention are particularly beneficial in the control of foaming of hydrocarbon liquids and more especially for diesel fuels as they are pumped rapidly from one vessel to another in the presence of air and possibly water. Such circumstances occur during transfer of materials though a supply pipe from one vessel to another, as required during separation of various grades of hydrocarbon liquids from crude oil or during separation of various grades of hydrocarbon liquid from selected feedstocks; and in the transfer of hydrocarbon liquids from road tankers to static storage tanks.

Our organopolysiloxane foam control agents are added directly to the hydrocarbon fuel or may be predispersed in hydrocarbon liquid, xylene, toluene, naphtha and other aromatic compounds or in various ketones; esters; ethers; and commonly used organic solvents.

The following examples are disclosed to further teach the invention which is properly delineated by the appended claims. All amounts (parts and percentages) are by weight unless otherwise indicated.

### Example 1

Compound A was an organopolysiloxane having the formula Me₃SiO(Me₂SiO)_{13.5}(MeR¹SiO)_{1.9}SiMe₃ wherein R¹ is a group having the formula -(CH₂)₃-O-(C₂H₄O)₁₂H wherein Me denotes methyl. Compound A is an antifoam compound which falls within the scope of U.S. Patent 4,690,688.

Compound B was prepared by placing 82.8 weight percent of Compound A and 17.2 weight percent of n-octenylsuccinic anhydride into a 3-necked flask equipped with a stirrer, thermometer and temperature controller. The mixture was heated to 100°C. for 2 hours. Next, the mixture was allowed to cool to room temperature.

Compound C was prepared in the same manner as compound B, except that 81.8 weight percent of Compound A and 18.2 weight percent of nonenylsuccinic anhydride were used in the reaction.

Compound D was prepared in the same manner as compound B, except that 80.9 weight percent of Compound A and 19.1 weight percent of n-decenylsuccinic anhydride were used.

Compound E was prepared in the same manner as compound B, except that 79.2 weight percent of Compound A and 20.8 weight percent of tetra(isopropyl)succinic anhydride were used.

The resulting organopolysiloxane compounds had the average formula Me₃SiO(Me₂SiO)_{13.5}(MeR¹SiO)_{1.9}SiMe₃, wherein R¹ is a group having the formula -(CH₂)₃-O-(C₂H₄O)₁₂R² and where R² is defined in the following Table:

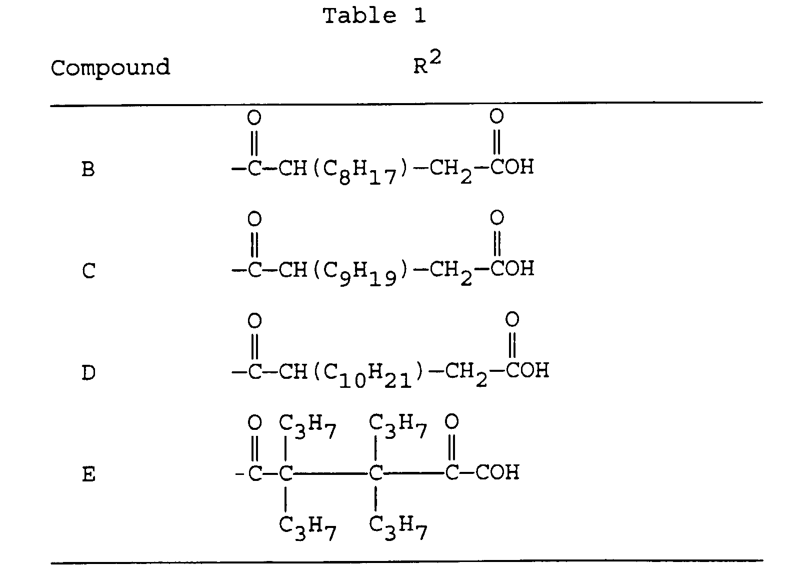

Compounds A, B, C, D and E, were then individually cold blended with a commercially available diesel fuel additive denoted "Additive X1". The concentration of each organopolysiloxane compound was 1.6 weight percent in the additive.

Each of these mixtures were then mixed with a commercially available diesel fuel, having a low sulfur content, such that the concentration of each of the organopolysiloxane compounds was 8 parts per million (ppm), based on the total weight of the fuel. The fuels containing Compounds A to E were denoted "Fuel A" through "Fuel E". Fuels A, B, C, D, E and a "fuel control" (which contained diesel fuel and Additive X1 but no organopolysiloxane compound) were each subjected to a Shake Test. In the Shake Test, 100 cm³ of each of the mixtures were pipetted into separate 250 cm³ graduated cylinders. The cylinders were then stopped with a glass stopper and the contents shaken 100 times during a one minute period. The foam volume immediately after shaking had stopped was recorded and the amount of time required for the foam to break and expose a clear section of liquid was measured. The fuels were tested 1 day after they were prepared (i.e. after addition of the organopolysiloxane compound-additive mixture to each of the fuels). The foam height of each fuel was then converted to a "Percent Foam Volume" using the following formula, which is relative to the original liquid volume of 100 cm³: 100 x {(recorded total liquid and foam volume - 100cm³)/100cm³}= "Percent Foam Volume". The results are given in Table 2.

**Table 2**

| Fuel | % Foam Volume | Break Time |
|---|---|---|
| FUEL CONTROL | +53% | 13 sec. |
| A | +30% | 4 sec. |
| B | +45% | 5 sec. |
| C | +50% | 5 sec. |
| D | +51% | 6 sec. |
| E | +49% | 10 sec. |

Table 2 shows that hydrocarbon fuels containing a compound of this invention, such as Compounds B, C or D had equivalent break times to a fuel containing a prior art compound (Compound A) and was superior in both break time and percent foam volume, in comparison to the untreated diesel fuel. Thus, the compounds of this invention were effective foam control agents.

### Example 2

Compound F was prepared by placing 82.8 weight percent of Compound A of Example 1 and 17.2 weight percent of di-isobutenylsuccinic anhydride into a 3-necked flask equipped with a stirrer, thermometer and temperature controller. The mixture was heated to 100°C. for 2 hours. Next, the mixture was allowed to cool to room temperature.

Compound G was prepared in the same manner as compound F, except that 74.2 weight percent of Compound A and 25.8 weight percent of iso-octenylsuccinic anhydride were used in the reaction.

Compound H was prepared in the same manner as compound F, except that 49.8 weight percent of Compound A and 50.2 weight percent of polyisobutenylsuccinic anhydride were used.

The resulting organopolysiloxane compounds had the average formula Me₃SiO(Me₂SiO)_{13.5}(MeR¹SiO)_{1.9}SiMe₃ wherein R¹ is a group having the formula -(CH₂)₃-O-(C₂H₄O)₁₂R² and wherein R² is defined in the following Table:

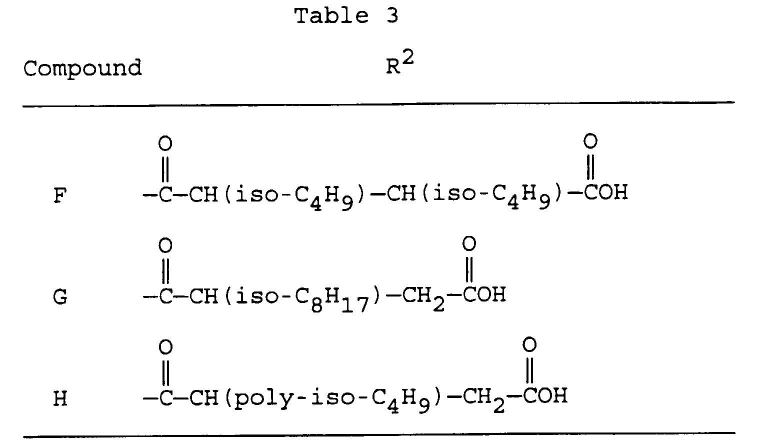

Compounds A, B, C, D and E from Example 1 and Compounds F, G and H were then individually cold blended with a commercially available diesel fuel additive denoted "Additive X2". The concentration of each organopolysiloxane compound was 1.6 weight percent in the additive. The compatibility of each of the mixtures of compound and additive was then tested. The mixtures were determined to be compatible if the organopolysiloxane compound and the fuel additive yielded a clear solution. If the resulting solution was cloudy, then there was no compatibility. The results of this compatibility test are described in Table 4.

**Table 4**

| Mixture | Compatibility |
|---|---|
| A | NO |
| B | YES |
| C | YES |
| D | YES |
| E | YES |
| F | YES |
| G | YES |

It is apparent from Table 4 that a mixture of diesel fuel additive and a compound of the present invention (which contains a polyether group which is capped by a succinic anhydride group), such as Compound B, C, D, E, F, G or H are more compatible than the prior art compound (Compound A) which was found incompatible with the fuel additive.

Each of these mixtures were then mixed with a commercially available diesel fuel, having a low sulfur content, such that the concentration of each of the organopolysiloxane compounds was 8 ppm, based on the total weight of the fuel. The fuels containing Compound, A, B, C, D, E, F, G and H respectively and a fuel control as described above were each subjected to the Shake Test procedure of Example 1, except that in this instance 50 cm³ of each fuel were pipetted into separate 100 cm³ graduated cylinders. The foam height of each fuel was then converted to a "Percent Foam Volume" using the following formula, which is relative to the original liquid volume of 50 cm³: 100 x {(recorded total liquid and foam volume - 50cm³)/50cm³}= "Percent Foam Volume". The fuels were tested 1 day after they were prepared. The results are provided in Table 5.

**Table 5**

| Fuel | % Foam Volume | Break Time |
|---|---|---|
| FUEL CONTROL | +40% | 15 sec. |
| A | +20% | 3 sec. |
| B | +43% | 7 sec. |
| C | +40% | 7 sec. |
| D | +43% | 8 sec. |
| E | +42% | 7 sec. |
| F | +41% | 21 sec. |
| G | +43% | 8 sec. |
| H | +43% | 26 sec. |

It is seen from Table 5 that generally a fuel containing a compound of the present invention, on average, (Fuels B-E and G), had nearly equivalent break times to a fuel containing a prior art compound (Compound A) and in general has superior break times in comparison to untreated diesel fuels. Thus, the compounds of this invention are effective foam control agents.

### Example 3

Compounds A, F, C and E were mixed in a concentration of 1.6 weight percent with a diesel fuel additive denoted "Additive X3". Each of the respective mixtures were then individually added to a commercially available diesel fuel, having a low sulfur content, such that the concentration of each of the organopolysiloxane compounds was 8 ppm, based on the total weight of the fuel. The fuel containing Compound A was denoted "Fuel A", the fuel containing compound F was denoted "Fuel F" and so forth. Fuel A, F, C and E and a "fuel control" (which contained diesel fuel and Additive X3 but no organopolysiloxane compound) were each subjected to the Shake Test procedure of Example 2 and the Percent Foam Volume of each fuel was then calculated by the procedure of Example 1. The results are disclosed in Table 6.

**Table 6**

| Fuel | % Foam Volume | Break Time |
|---|---|---|
| FUEL CONTROL | +40% | 13 sec. |
| A | +33% | 4 sec. |
| F | +40% | 11 sec. |
| C | +40% | 8 sec. |
| E | +43% | 27 sec. |

Table 6 shows that fuel containing a compound of this invention, such as Compound C or F, had nearly equivalent break times to a fuel containing a prior art compound (Compound A) and that it was superior in break tin in comparison to untreated diesel fuel. Thus, the compounds of this invention are effective foam control agents.

### Example 4

Compound I was prepared by placing 249.6 grams of Compound A, described above, and 12.6 grams of n-nonenylsuccinic anhydride into a 3-necked flask equipped with a stirrer, thermometer and temperature controller. The mixture was heated to 100°C. for 2 hours. Next, the mixture was allowed to cool to room temperature.

Compound J was prepared in the same manner as compound I, except that 249.6 grams of Compound A and 25.2 grams of n-nonenylsuccinic anhydride were used in the reaction.

Compound K was prepared in the same manner as compound I, except that 249.6 grams of Compound A and 37.8 grams of n-nonenylsuccinic anhydride were used.

The resulting organopolysiloxane compounds had the average formula Me₃SiO(Me₂SiO)_{13.5}(MeR¹SiO)_{1.9}SiMe₃ wherein R¹ is a group having the formula -(CH₂)₃-O-(C₂H₄O)₁₂R² and wherein R² is defined in the following Table:

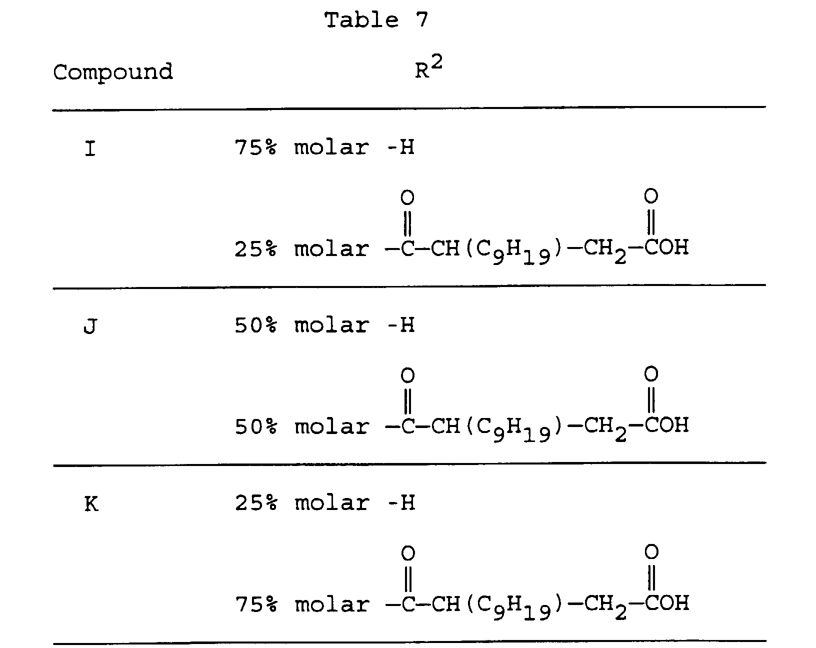

Compounds I, J, K, A and C, were then individually cold blended with propylene carbonate as a diluent. The concentration of the organopolysiloxane compound was 1.6 weight percent in the diluent.

Each of the mixtures were then mixed with a commercially available off-highway diesel fuel, having a high sulfur content such that the concentration of each of the organopolysiloxane compounds was 8 ppm, based on the total weight of the fuel. The fuel containing Compound I was denoted "Fuel I", the fuel containing compound J was denoted "Fuel J" and so forth. Fuel I, J, K, A and C and a "fuel control" (which contained diesel fuel and the diluent but no organopolysiloxane compound) were each subjected to the Shake Test procedure of Example 1 and the Percent Foam Volume of each fuel was then calculated by the procedure of Example 1. The fuels were tested 3 days after they were prepared. The results of the test are disclosed in Table 8.

**Table 8**

| Fuel | % Foam Volume | Break Time |
|---|---|---|
| FUEL CONTROL | +34% | 23 sec. |
| A | +11% | 15 sec. |
| I | +19% | 24 sec. |
| J | +12% | 15 sec. |
| K | +19% | 18 sec. |
| C | +24% | 28 sec. |

Table 8 illustrates fuels which contain organopolysiloxane compounds and have 50 to 75 molar percent of the end of the polyether group, capped with a succinic anhydride group, are preferred. Moreover, all of the fuels of the instant invention are effective foam control agents.

### Example 5

The procedure of Example 4 was repeated using fuels I, J, K, A and C, except that in this case the fuels were subjected to the shake test procedure of Example 2. The Percent Foam Volume of each fuel was again calculated by the procedure of Example 1. The fuels were tested the same day they were prepared. The results of the test are reported in Table 9.

**Table 9**

| Fuel | % Foam Volume | Break Time |
|---|---|---|
| FUEL CONTROL | +33% | 35 sec. |
| A | +14% | 15 sec. |
| I | +13% | 17 sec. |
| J | +10% | 10 sec. |
| K | +16% | 17 sec. |
| C | +23% | 27 sec. |

Table 9 illustrates that fuels that contain organopolysiloxane compounds, which have 50 to 75 percent molar of the end of the polyether group capped with a succinic anhydride group, are preferred. Also demonstrated is that all of the fuels of the instant invention are effective foam control agents.

### Example 6

The procedure of Example 4 was repeated using fuels I, J, K, A and C, except that in this case the diluent was xylene. The results are enumerated in Table 10.

**Table 10**

| Fuel | % Foam Volume | Break Time |
|---|---|---|
| FUEL CONTROL | +26% | 23 sec. |
| A | +12% | 12 sec. |
| I | +13% | 23 sec. |
| J | +10% | 11 sec. |
| K | +14% | 16 sec. |
| C | +23% | 22 sec. |

Table 10 illustrates that fuels which contain organopolysiloxane compounds, having 50 to 75 molar percent of the end of the polyether group capped with a succinic anhydride group, are preferred. All fuels of the instant invention are effective foam control agents.

### Example 7

Compounds I, J, K, A and C above were then mixed with diesel fuel additive "X2" in a concentration of 1.6 weight percent of organopolysiloxane compound. The compatibility of these mixtures was then tested by the procedure of Example 2. The results are shown in Table 11.

**Table 11**

| Mixture | Compatibility |
|---|---|
| A | NO |
| I | YES |
| J | YES |
| K | YES |
| C | YES |

Table 11 exhibits that the compounds of the instant invention were compatible with a diesel fuel additive, even when only 25 molar percent of the polyether was capped with a succinic anhydride group.

### Example 8

Compound L was an organopolysiloxane having the formula Me₃SiO(Me₂SiO)₁₅₇(MeR¹SiO)₂₁SiMe₃ wherein R¹ is a group having the formula -(CH₂)₃-O-(C₂H₄O)₁₀-(C₃H₆O)₄-H. Compound L is an antifoam compound which falls within the scope of the disclosure of U.S. Patent 3,233,986.

Compound M was prepared by the procedure in Example 1, except that 99.2 grams of Compound L was used in place of Compound A and 0.8 gram of nonenyl succinic anhydride were used in the reaction.

Compound N was prepared by the procedure in Example 1, except that 99.5 grams of Compound L was used in place of Compound A and 0.5 gram of nonenyl succinic anhydride were used.

The resulting organopolysiloxane compounds had the average formula Me₃SiO(Me₂SiO)₁₅₇(MeR¹SiO)₂₁SiMe³, wherein R¹ is a group having the formula

-(CH₂)₃-O-(C₂H₄O)₁₀-(C₃H₆O)₄-R²

and wherein R² is defined in the following Table:

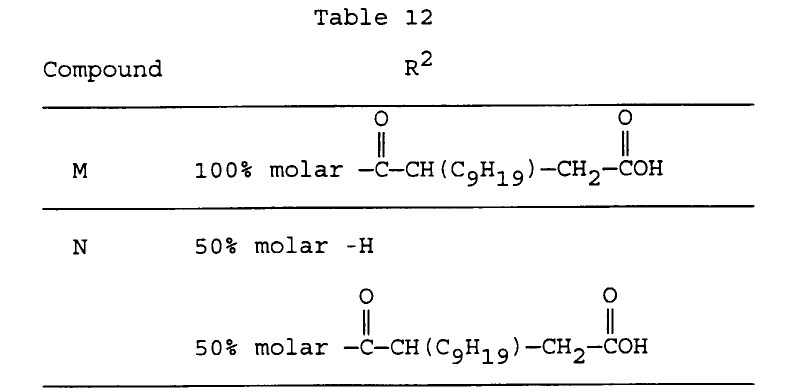

Compounds L, M and N were next mixed in a concentration of 1.6 weight percent with diesel fuel additive X3. Each of the respective mixtures were then individually added to a commercially available diesel fuel, having a low sulfur content, such that the concentration of each of the organopolysiloxane compounds was 8 ppm based on the total weight of the fuel. Fuels L, M, N and a "fuel control" (which contained diesel fuel and Additive X3 but no organopolysiloxane compound) were each subjected to the Shake Test procedure of Example 1 and the Percent Foam Volume of each fuel was then calculated by the procedure of Example 1. The fuels were tested the day they were prepared and again 3 days after they were prepared. The results of the test are disclosed in Tables 13 and 14.

**Table 13**

| | DAY 0 | |
|---|---|---|
| Fuel | % Foam Volume | Break Time |
| FUEL CONTROL | +34% | 21 sec. |
| L | + 0% | 0 sec. |
| M | + 0% | 0 sec. |
| N | + 0% | 0 sec. |

**Table 14**

| | DAY 3 | |
|---|---|---|
| Fuel | % Foam Volume | Break Time |
| FUEL CONTROL | +28% | 22 sec. |
| L | + 0% | 0 sec. |
| M | + 0% | 0 sec. |
| N | + 0% | 0 sec. |

Tables 13 and 14 show that the compounds of this invention were effective foam control agents in diesel fuels.

### Example 9

Compound O was prepared by the procedure of Example 1, except 49.6 grams of Compound L and 0.5 grams of dodecenyl succinic anhydride were used in the reaction.

Compound P was prepared by mixing 74.3 grams of Compound L and 0.7 gram of dodecenyl succinic anhydride in a flask. This solution was then heated to a temperature of 100°C. for 1 hour. Next, 77.2 grams of ethanol were added to the flask and then the solution was catalyzed with 0.39 microliter of 1 molar HCl. This solution was then heated to 70°C. for 1 hour. The solution was then allowed to cool to room temperature. Next, 1.6 grams of sodium bicarbonate were added to the solution and the solution was allowed to equilibrate for one hour. The salts were filtered from the solution and the remaining ethanol was removed by vacuum stripping.

Compound Q was prepared in the same manner as Compound O except that 49.4 grams of Compound L and 0.7 gram of iso-octadecenyl succinic anhydride in place of dodecenyl succinic anhydride were used in the reaction.

Compound R was prepared by the procedure for Compound P, except that 49.4 grams of Compound L, 0.7 gram of iso-octadecenyl succinic anhydride in place of the dodecenyl succinic anhydride and 51.3 grams of ethanol were used.

The resulting organopolysiloxane compounds had the average formula Me₃SiO(Me₂SiO)₁₅₇(MeR¹SiO)₂₁SiMe₃, wherein R¹ is a group having the formula

-(CH₂)₃-O-(C₂H₄O)₁₀-(C₃H₆O)₄-R²

and wherein R² is defined in the following Table:

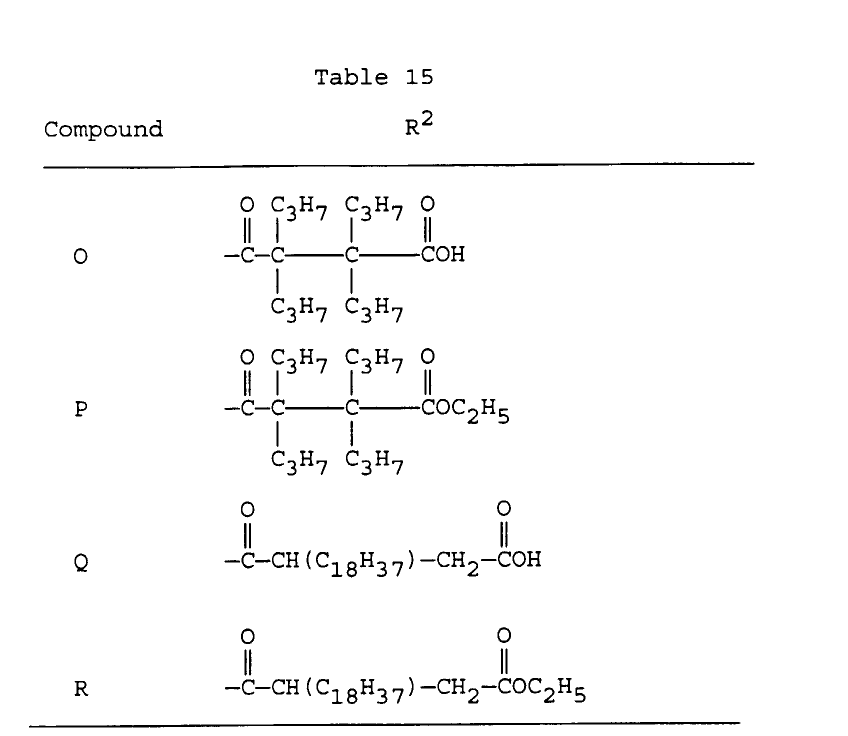

Compounds A, O, P, Q and R were then individually cold blended with a commercially available diesel fuel additive denoted "Additive X1". The concentration of the organopolysiloxane compound was about 1.6 weight percent in the additive.

Each of the prepared mixtures were then mixed with a commercially available off-highway diesel fuel, having a high sulfur content, such that the concentration of each of the organopolysiloxane compound was 8 ppm based on the total weight of the fuel. Fuels A, O, P, Q, R and a fuel control, as defined above, were each subjected to the Shake Test procedure of Example 1 and the Percent Foam Volume of each fuel was then calculated by the procedure of Example 1. The % foam volume and the break time for each fuel were taken 1 day after fuel preparation and then 4 days after fuel preparation. These values were then averaged. The results of the test are disclosed in Table 16.

**Table 16**

| Fuel | % Foam Volume | Break Time |
|---|---|---|
| FUEL CONTROL | +30% | 20 sec. |
| A | + 6% | 19 sec. |
| O | + 1% | 6 sec. |
| P | 0% | 0 sec. |
| Q | 0% | 0 sec. |
| R | + 4% | 14 sec. |

Table 16 shows that fuels containing the compounds of the instant invention had reduced foam volumes and break times when compared to prior art antifoam compounds and in turn of the fuel control.

## Claims

1. An organopolysiloxane compound having its formula selected from
(i) RR¹R²SiO(R₂SiO)ₐ(RR¹SiO)_{b}(RR²SiO)_{c}SiRR¹R²,
(ii) RR¹R²SiO(R₂SiO)ₐ(RR²SiO)_{c}SiRR¹R²,
(iii) RR¹R²SiO(R₂SiO)ₐ(RR¹SiO)_{b}SiRR¹R²,
or
(iv) RR¹R²SiO(R₂SiO)ₐSiRR¹R²
wherein R is a monovalent hydrocarbon group having from 1 to 20 carbon atoms, R¹ is R or a group having its formula selected from
(v) -R³-O-(C₂H₄O)_{d}-(C₃H₆O)ₑ-R⁴,
(vi) -R³-O-(C₂H₄O)_{d}-R⁴,
or
(vii) -R³-O-(C₃H₆O)ₑ-R⁴,
R² is R or a group having its formula selected from 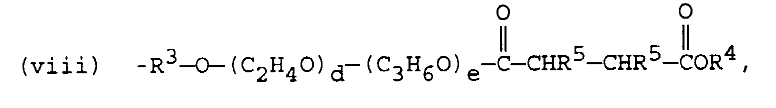 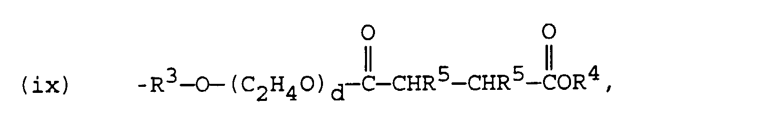 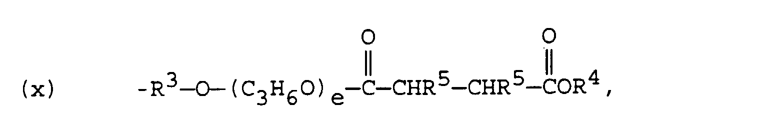 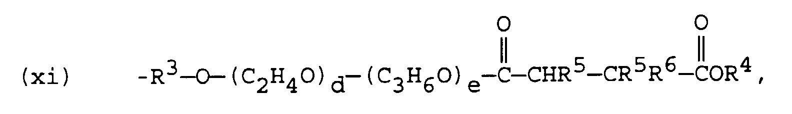 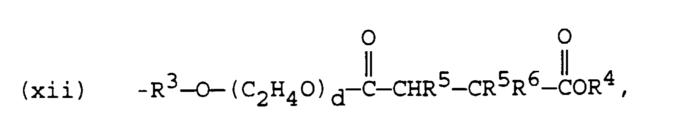 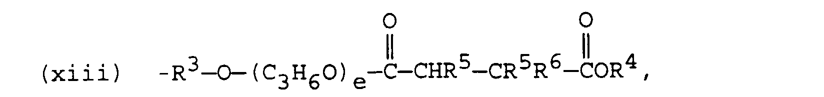 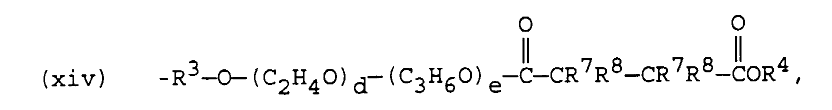 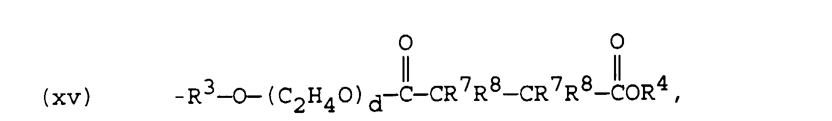 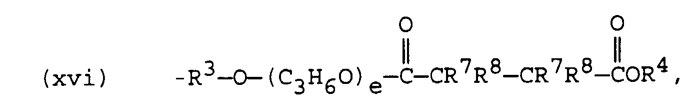 or 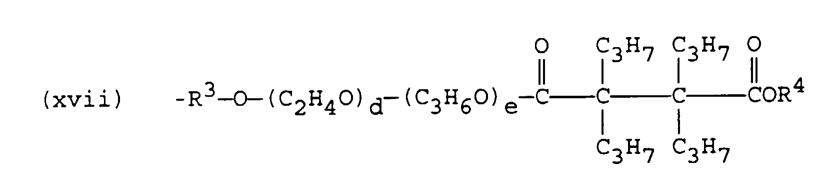 wherein R³ is a divalent hydrocarbon group having from 1 to 20 carbon atoms, R⁴ is selected from a hydrogen atom, an alkyl group or an aryl group, R⁵ and R⁶ are each a group having the formula -(CₙH₂ₙ₊₁) where n has a value from 1 to 30, R⁷ and R⁸ are each a group having the formula -(CₙH₂ₙ₊₁) where n has a value of 1, 2 or 4 to 30, a has a value from 1 to 1000, b has a value from greater than zero to 100, c has a value from greater than zero to 100, d has a value from greater than zero to 150 and e has a value from greater than zero to 150, with the proviso that there is at least one group having its formula selected from formula (viii)-(xvii) as defined above per molecule.

2. A compound according to claim 1 wherein R³ is selected from methylene, ethylene, propylene, butylene, pentylene, trimethylene, 2-methyltrimethylene, pentamethylene, hexamethylene, 3-ethyl-hexamethylene, octamethylene, -CH₂(CH₃)CH-, -CH₂CH(CH₃)CH₂-, -(CH₂)₁₈-, cyclohexylene, phenylene or benzylene.

3. A compound according to claim 1 wherein R⁵ and R⁶ are each individually selected from -CH₃, -(C₂H₅), -(C₃H₇), -(C₄H₉), -(C₆H₁₃), -(C₈H₁₇), -(C₉H₁₉), -(C₁₀H₂₁), -(C₁₂H₂₅), -(C₁₄H₂₉), -(C₁₆H₃₃), -(C₁₈H₃₇), -(C₂₀H₄₁) or -(C₃₀H₆₁).

4. A compound according to claim 1 wherein R⁷ and R⁸ are each individually selected from -CH₃, -(C₂H₅), -(C₄H₉), -(C₆H₁₃), -(C₈H₁₇), -(C₉H₁₉), -(C₁₀H₂₁), -(C₁₂H₂₅), -(C₁₄H₂₉), -(C₁₆H₃₃), -(C₁₈H₃₇), -(C₂₀H₄₁) or -(C₃₀H₆₁).

5. A compound according to claim 1 wherein R⁴ is selected from methyl or ethyl.

6. A compound according to claim 1 wherein the organopolysiloxane compound has a formula selected from
Me₃SiO(Me₂SiO)ₐ(MeR¹SiO)_{b}(MeR²SiO)_{c}SiMe₃
or
Me₃SiO(Me₂SiO)ₐ(MeR²SiO)_{c}SiMe₃
wherein R¹ is a group having its formula selected from
-(CH₂)₃-O-(C₂H₄O)_{d}-(C₃H₆O)ₑ-H
or
-(CH₂)₃-O-(C₂H₄O)_{d}-H
and R² is a group having its formula selected from 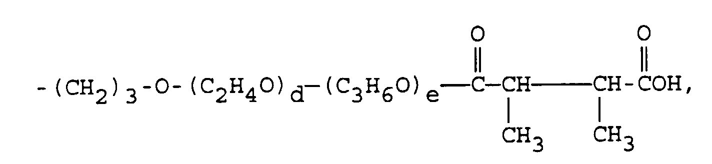 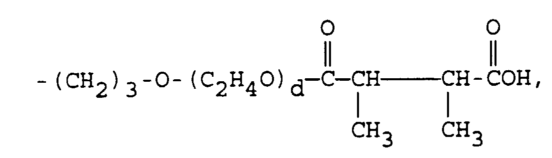 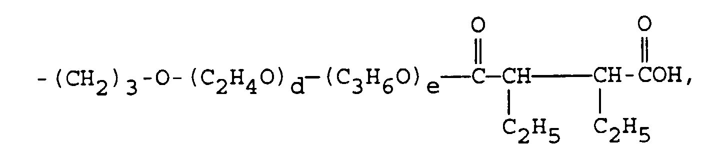 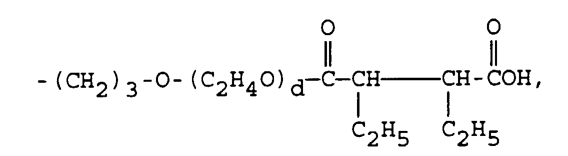 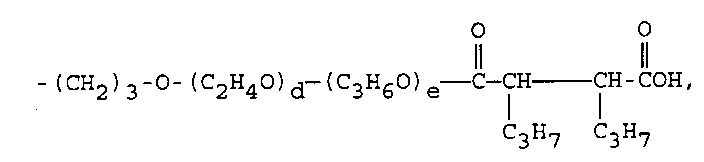 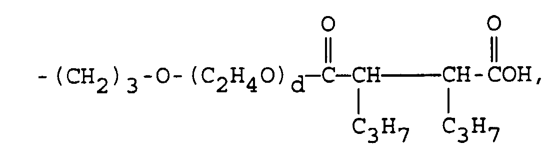 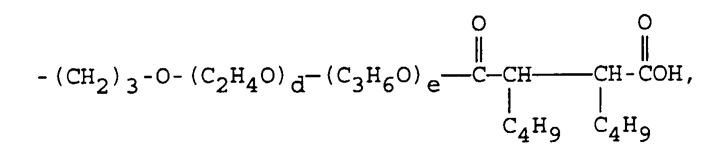 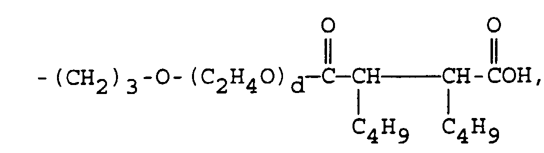 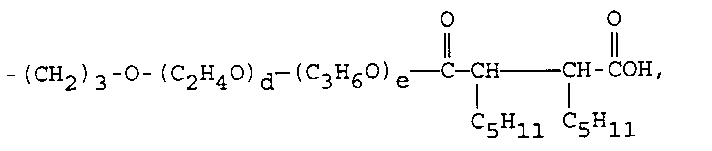 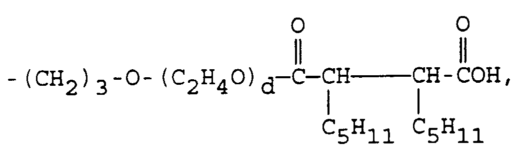 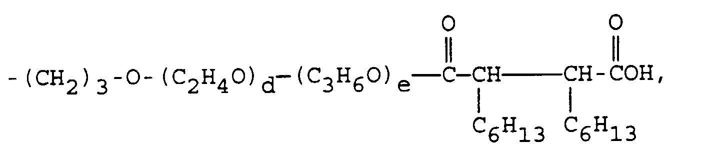 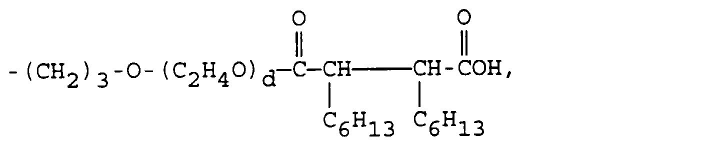 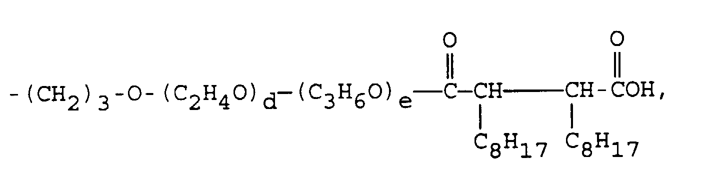 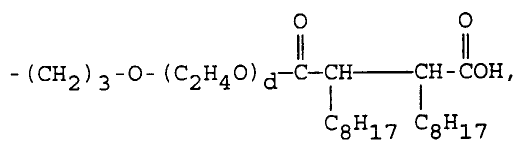 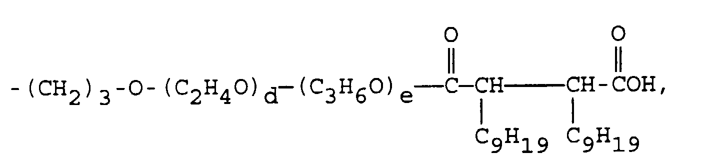 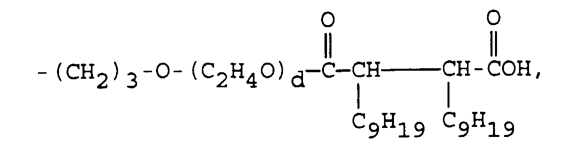 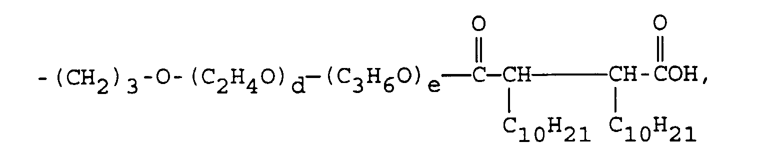 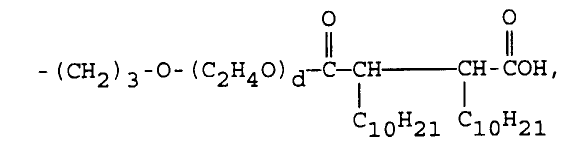 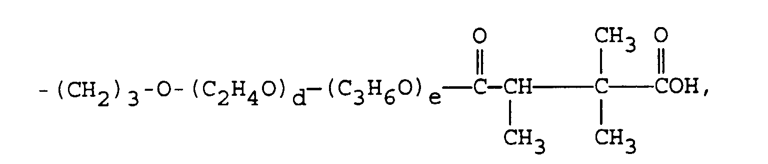 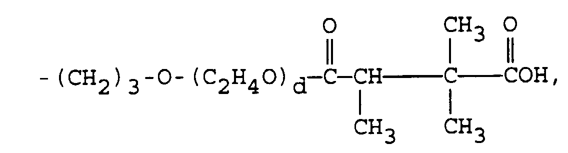 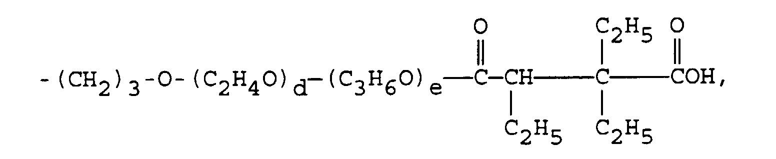 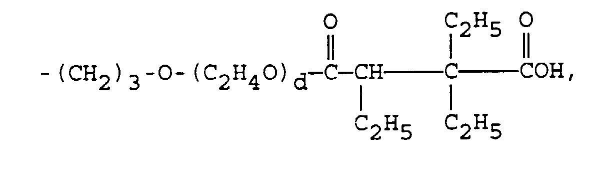 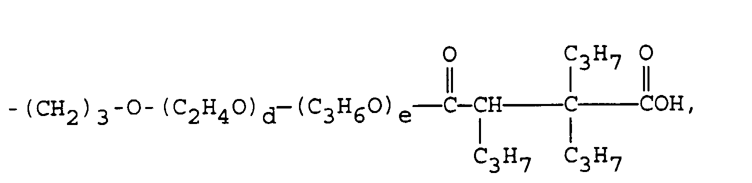 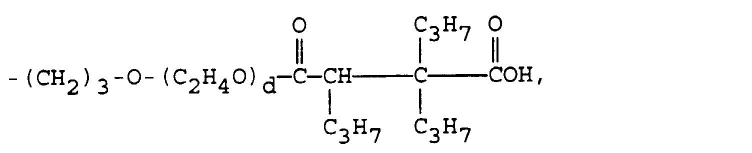 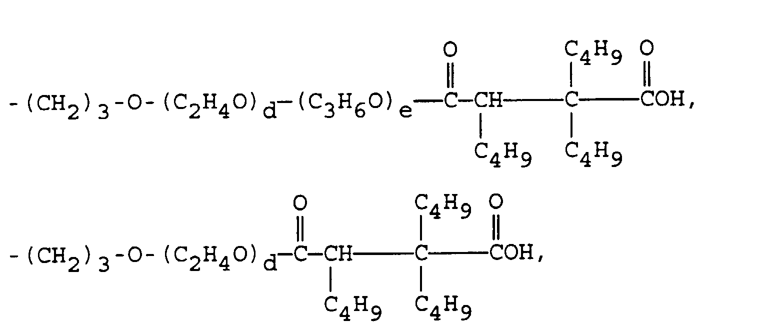 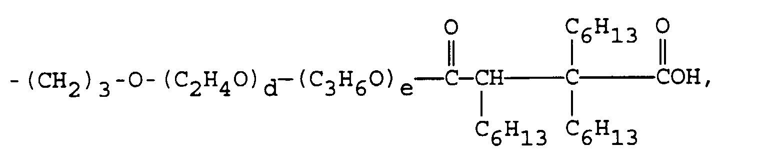 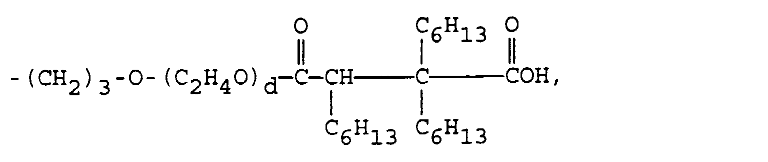 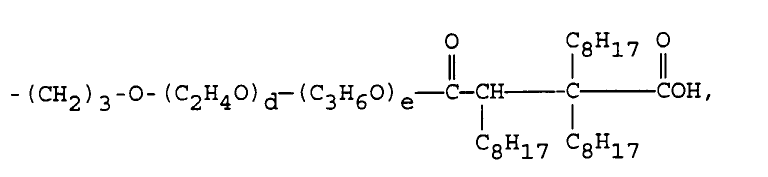 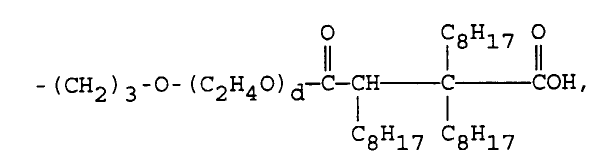 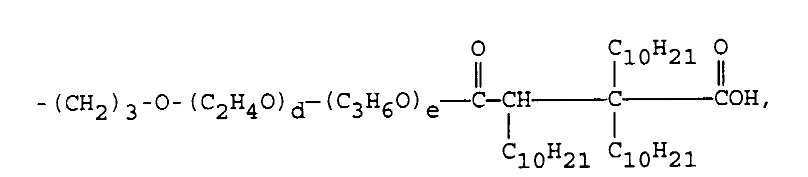 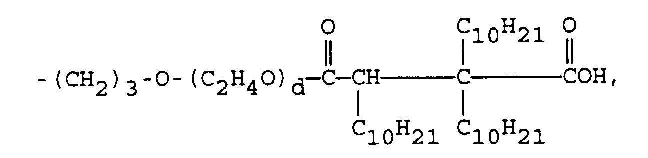 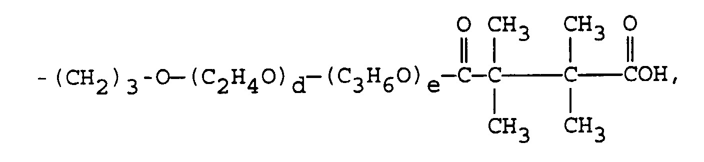 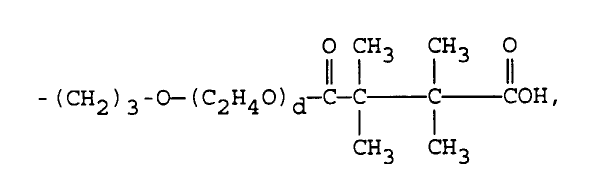 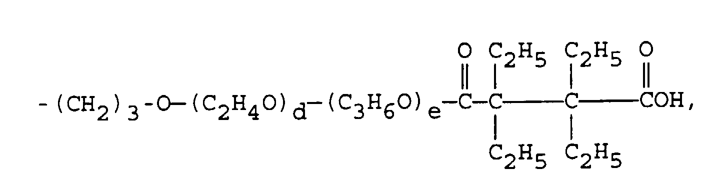 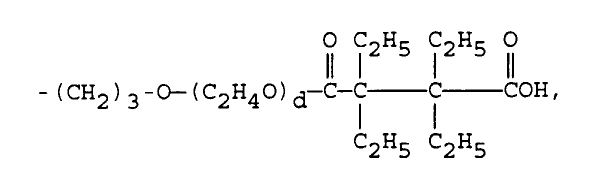 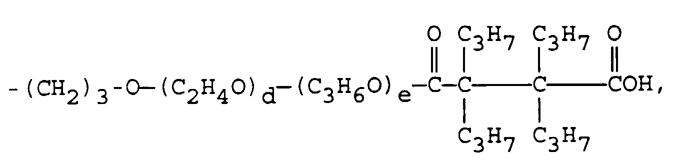 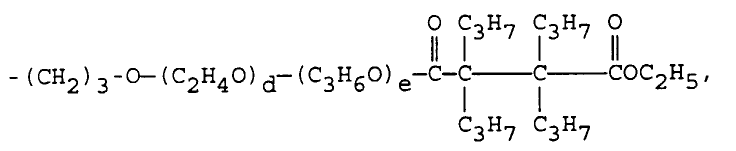 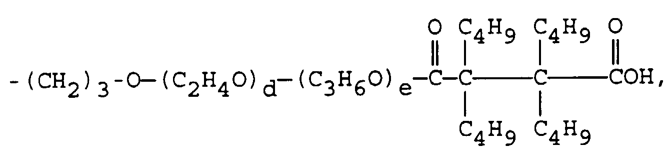 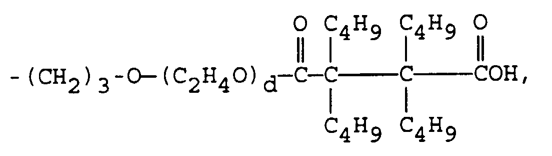 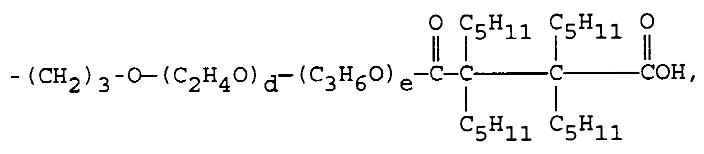 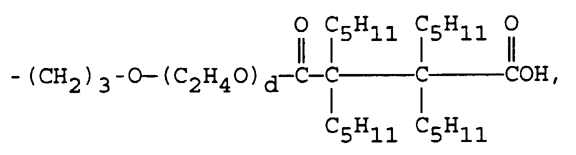 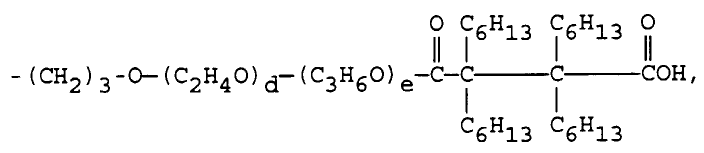 or 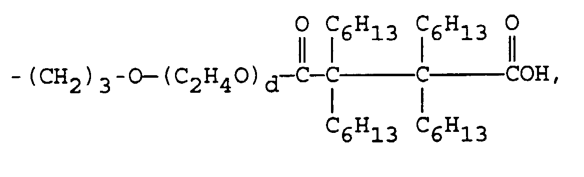 wherein Me denotes methyl, a has a value from 1 to 200, b has a value from greater than zero to 40, c has a value from greater than zero to 40, R³ is an alkylene group having from 2 to 8 carbon atoms, d has a value from greater than zero to 50 and e has a value from greater than zero to 50.

7. A composition comprising:
(A) a hydrocarbon fuel; and
(B) the organopolysiloxane compound of claim 1.

8. A composition according to claim 7 wherein the hydrocarbon fuel is diesel fuel or jet fuel.

9. A composition according to claim 7 wherein the composition further comprises at least one ingredient selected from corrosion inhibitors, anti-scaling agents, octane improvers, emulsifiers, detergents, demulsifiers or drying agents.

10. A composition according to claim 7 wherein the composition further comprises a solvent selected from xylene, toluene, naphtha, ketones, esters or ethers.
